**Europäisches Patentamt**

**European Patent Office**

**Office européen des brevets**

(19)

(11) Veröffentlichungsnummer : **0 039 490**
**B1**

(12) **EUROPÄISCHE PATENTSCHRIFT**

(45) Veröffentlichungstag der Patentschrift :
07.11.84

(21) Anmeldenummer : **81103285.3**

(22) Anmeldetag : 30.04.81

(51) Int. Cl.³ : **C 03 B   9/30**, C 03 B   9/193

(54) Verfahren zum maschinellen Herstellen geblasener Überfanggläser.

(30) Priorität : 06.05.80 DE 3017348

(43) Veröffentlichungstag der Anmeldung :
11.11.81 Patentblatt 81/45

(45) Bekanntmachung des Hinweises auf die Patenterteilung : 07.11.84 Patentblatt 84/45

(84) Benannte Vertragsstaaten :
AT BE CH DE FR GB IT LI NL SE

(56) Entgegenhaltungen :
DE-A- 2 908 013
DE-C-   582 281
US-A- 2 802 309

(73) Patentinhaber : **F.X. Nachtmann Bleikristallwerke GmbH**
**D-8482 Neustadt a. d. Waldnaab (DE)**

(72) Erfinder : **Steger, Willi**
**Haus-Nr. 771**
**D-8356 Riedlhütte (DE)**

(74) Vertreter : **Weickmann, Heinrich, Dipl.-Ing. et al**
**Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel**
**Postfach 860820**
**D-8000 München 86 (DE)**

## Beschreibung

Die Erfindung betrifft ein Verfahren zum maschinellen Herstellen geblasener Überfang-Hohlglaskörper, bei dem zunächst ein Glaskörper hergestellt wird, bei dem dann in einer Preßform auf den Glaskörper ein Glastropfen aufgebracht und in der Preßform zusammen mit dem Glaskörper zu einem mehrschichtigen Preßling gepreßt wird, wobei der Preßling hierbei oder nachträglich zu einem Kölbel geformt wird und bei dem dann das Kölbel in eine Fertigform eingeblasen wird.

Überfanggläser sind mehrschichtige Gläser, deren meistens aus Kristallglas bestehende Grundglasschicht mit ein oder mehreren verschiedenfarbigen Farbglasschichten überzogen ist. Durch Anschleifen oder Anätzen der Farbglasschichten lassen sich eine Reihe effektvoller Glasdekorationen erzielen, wie sie beispielsweise bei der Kelchglas- und Geschenkartikelherstellung erwünscht sind.

Überfang-Hohlgläser wurden bisher im wesentlichen manuell hergestellt. Bei einem bekannten Verfahren wurde zunächst aus Grundglas ein Kölbel geblasen, welches dann in einen Hafen geschmolzenes Farbglas gesteckt (überstochen) wurde. Anschließend wurde das Kölbel in die gewünschte Form fertiggeblasen. Bei einem anderen Verfahren wurde zunächst wiederum aus Grundglas, beispielsweise Kristallglas, ein Kölbel geblasen, an das eine kleine Partie eines teilweise erweichten Farbglaszapfens angeheftet wurde, während der Rest des Zapfens abgeschnitten wurde. Nach erneuter Erwärmung des Kölbels wurde das Farbglas gleichmäßig über das Kölbel verteilt und fertiggeblasen. Bei beiden Verfahren ist es auch bekannt, das mit Farbglas überfangene Kölbel mit einer weiteren Schicht Grundglas zu überziehen, so daß die Farbglasschicht zwischen zwei Grundglasschichten zu liegen kommt.

Bei einem weiteren bekannten manuellen Verfahren zur Herstellung von Überfang-Hohlgläsern wird von einer vorgefertigten, beispielsweise halbkugelförmigen Farbglasschale ausgegangen. Die Farbglasschale wird auf eine Temperatur unterhalb der Viskositätsgrenze vorgewärmt, worauf dann der an einer Glasbläserpfeife hängende, bereits in Kölbelform vorgeblasene Grundglastropfen in die Farbglasschale eingedrückt und fertiggeblasen wird. Der Glasbläser muß hierbei manuell mittels eines Holzstücks oder dergleichen für eine gleichmäßige Verteilung des Farbglases und des Grundglases sorgen.

Einzelheiten von Herstellungsverfahren für Überfangglas sind beispielsweise aus Ludwig Springer, « Lehrbuch der Glastechnik », Wilhelm-Knapp-Verlag, Düsseldorf, Seiten 83 bis 87, zu entnehmen. Auf den Seiten 87 bis 91 dieses Buches werden Preß-Blasmaschinen erläutert, mit deren Hilfe blasgeformte Glasgefäße automatisch hergestellt werden können. Derartige Maschinen pressen einen Glastropfen in einer Kölbelform bzw. Vorform zu einem Kölbel, welches dann wieder erwärmt und gelängt wird. Das gelängte Kölbel wird anschließend in eine Fertigform eingeblasen. Die bekannten Maschinen wurden jedoch lediglich zur Herstellung von einfarbigen Glasgefäßen eingesetzt.

Aus der DE-C-582 281 ist ein Verfahren zur maschinellen Herstellung geblasener Überfang-Hohlglaskörper bekannt, bei dem in einer Vorform mit von unten her zustellbarem Preßstempel aus dem Grundglas des zu blasenden Hohlglaskörpers ein Vorkölbel gepreßt wird. Das die Oberseite des Vorkölbels bestimmende Oberteil der Vorform ist auswechselbar. Nach Austausch des Oberteils der Vorform wird auf das Vorkölbel ein Glastropfen aus dem den späteren Überfang bildenden Farbglas aufgebracht und mittels eines von oben her zustellbaren weiteren Preßstempels zusammen mit dem Vorkölbel zu einem mehrschichtigen Preßling verpreßt. Der Preßling hat wiederum Kölbelform und wird zur Herstellung des Hohlglaskörpers in eine Fertigform eingeblasen. Bei dem bekannten Verfahren muß das den späteren Überfang bildende Farbglas auf ein relativ dickwandiges Vorkölbel aufgepreßt werden. Ist das Vorkölbel zu weich, verteilt sich der Farbglastropfen ungleichmäßig über die Oberfläche des Vorkölbels, was zu einer ungleichförmigen Schichtdicke des späteren Überfangs führt. Ist die Temperatur des Vorkölbels zu gering, so besteht die Gefahr, daß sich der Überfang nur ungenügend mit dem Grundglas verbindet, wobei zwischen dem Überfang und dem Grundglas Blasen entstehen können. Zwischen diesen Bedingungen muß ein Kompromiß eingegangen werden, der nicht immer hohen Anforderungen genügt.

Aus der US-A-2 802 309 ist ein weiteres Verfahren zum maschinellen Herstellen geblasener Überfang-Hohlglaskörper bekannt. Bei diesem Verfahren werden in eine Vorform nacheinander ein Grundglastropfen und ein den späteren Überfang bildender Farbglastropfen eingebracht und in einem einzigen Preßvorgang zu einem mehrschichten Kölbel gepreßt, welches dann in eine Fertigform eingeblasen wird. Bei einem derartigen Verfahren läßt sich keine definierte, gleichmäßige Schichtdicke des Überfangs erzielen.

Aufgabe der Erfindung ist es, das eingangs erläuterte, bekannte Verfahren zur maschinellen Herstellung geblasener Überfang-Hohlglaskörper so zu verbessern, daß sowohl eine gleichmäßige Verbindung des Überfangglases mit dem Grundglas des Hohlglaskörpers als auch eine gleichmäßige, vorbestimmbare Schichtdicke des Überfangglases erreicht wird.

Diese Aufgabe wird erfindungsgemäß dadurch gelöst, daß bei der Herstellung des Preßlings zunächst ein der Formkontur der Preßform im wesentlichen angepaßter, schalen- oder scheibenförmiger Mantelkörper aus Farbglas des Überfangs hergestellt wird und daß der Mantelkörper vorgewärmt wird, so daß er sich der Formkontur der Preßform anpaßt, bevor ein Glastropfen aus Grundglas des Überfang-Hohlglaskörpers auf ihn aufgebracht wird. Im Unterschied zu den bisher bekannten Herstellungsverfahren von Überfang-Hohlglaskörpern hat der den späteren Überfang bildende Mantelkörper bereits vor Anfertigung des Kölbels Schalen- oder Scheibenform (Schichtform). Der Mantelkörper beim Pressen des Preßlings seine vorbestimmte Schichtdicke im wesentlichen beibehält und sich innig und gleichmäßig mit dem Grundglas verbindet. Insbesondere kommt es nicht zu ungleichmäßigen Verbindungen aufgrund bereichsweiser Abkühlung des Mantelkörpers durch die Wand der Preßform.

In einer ersten Variante des Verfahrens wird hierbei vorzugsweise der Mantelkörper vor dem Einlegen in die Preßform zu einer in etwa der Formkontur der Preßform angepaßten Schale vorgeformt, so daß bereits von vornherein ein möglichst gleichmäßiger Anlagekontakt zwischen Mantelkörper und Preßform erreicht wird.

In einer zweiten Variante wird der Glastropfen des Grundglases auf einen als flache Scheibe geformten Mantelkörper aufgebracht und zu einer im wesentlichen flachen, mehrschichtigen Linse gepreßt. Das Kölbel wird bei dieser Variante aus der Linse vorzugsweise dadurch hergestellt, daß die Linse im erwärmten Zustand während einer vorgegebenen Zeitspanne von unten her ausschließlich entlang ihres Randbereichs aufgelagert wird. Aufgrund der Schwerkraft sinkt das erwärmte Glas der Linse im Mittenbereich ein und nimmt Kölbelform an. Ggf. kann das Glas während der Kölbelbildung weiter erwärmt werden. Ein nachfolgendes Längen des Kölbels, ggf. unter Einblasen von Druckluft oder dgl. in das Kölbelinnere kann sich anschließen. Ein derartiger Längvorgang kann auch bei der ersten Variante des Verfahrens vorgenommen werden. In beiden vorstehenden Varianten kann, soweit erforderlich, auch die Preßform vorgewärmt werden.

Im folgenden sollen Ausführungsbeispiele der Erfindung anhand von Zeichnungen näher erläutert werden. Hierbei zeigen die

Figur 1 bis 5 aufeinanderfolgende Arbeitsschritte bei der maschinellen Preßblasherstellung eines außen überfangenen Kelchglases, bei welchem das in einer Fertigform zu blasende Kölbel in einer Vorform in Kölbelform gepreßt wird, und

Figur 6 bis 8 eine Variante des Verfahrens, bei welchem das Kölbel durch Längen einer mehrschichtigen Preßglaslinse hergestellt wird.

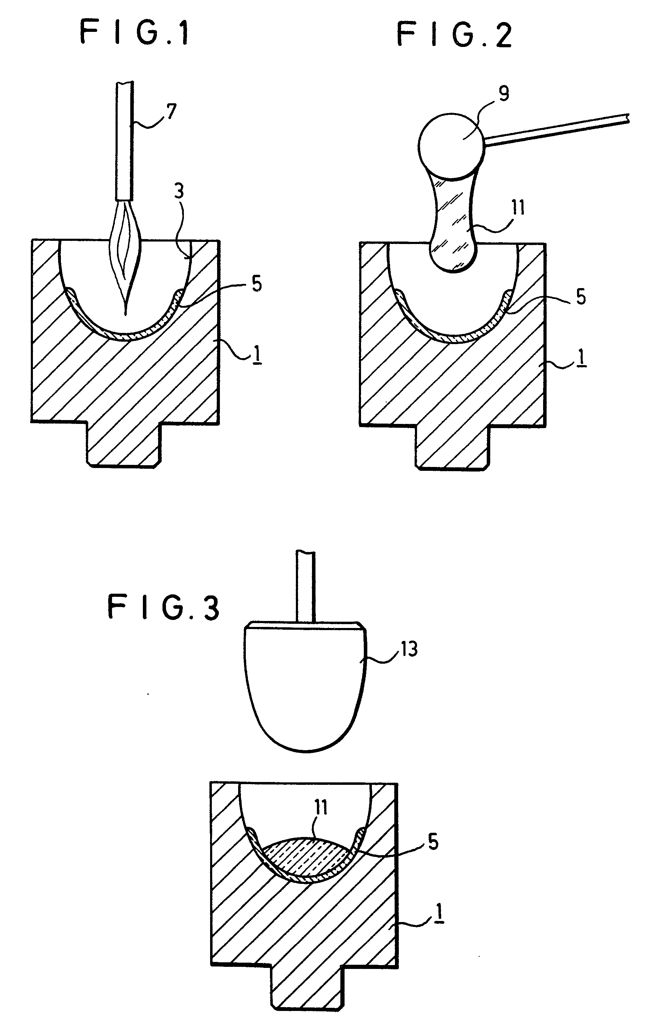

Fig. 1 zeigt eine Form 1, deren Kontur 3 etwa der Form eines Kölbels entspricht. In die Form 1 wird in einem ersten Arbeitsschritt ein aus Farbglas bestehender, der Kontur 3 etwa angepaßter, schalenförmiger Mantelkörper 5 eingelegt und in der Form mittels eines Gasbrenners 7 oder einer Elektroheizung oder dgl. soweit erwärmt, daß es sich der Kontur 3 der Form 1 gleichmäßig anschmiegt.

In einem zweiten Arbeitsschritt wird mittels eines Speisers, beispielsweise eines Kugelspeisers 9, ein das Grundglas des Kölbels bildender Glastropfen 11 in den vorerwärmten Mantelkörper 5 eingebracht (Fig. 2).

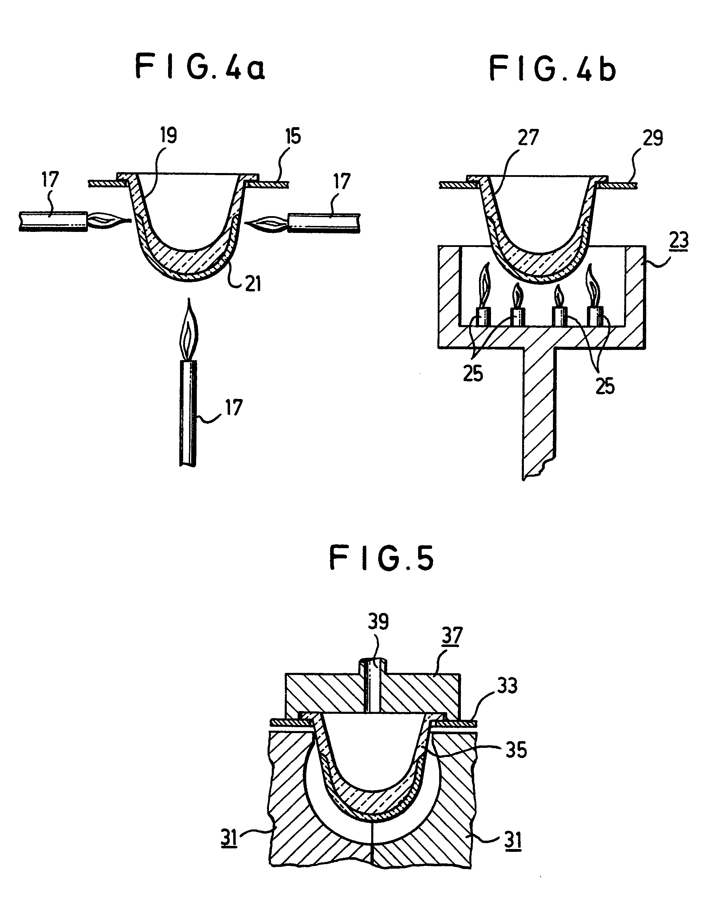

Fig. 3 zeigt den nächsten Arbeitsschritt, bei dem der Glastropfen 11 zusammen mit dem Mantelkörper 5 zu dem Kölbel geformt wird, indem ein Stempel bzw. Kolben 13 in die Form 1 eingepreßt wird. Der Preßdruck sorgt für innige verbindung des Glastropfens 11 mit dem Mantelkörper 5. Der durch die Form 1 geringfügig gekühlte Mantelkörper 5 behält seine schichtförmige Struktur, während der Glastropfen 11 den Zwischenraum zwischen der Form 1 und dem Kolben 13 vollständig ausfüllt.

Für die Weiterverarbeitung des nunmehr außen mit Farbglas überfangenen Kölbels wird dieses außerhalb der Form 1, wie in Fig. 4a dargestellt ist, an einem Ring 15 allseitig von außen her mittels Gasbrenner 17 oder dgl. erwärmt. Das Kölbel ist in Fig. 4a mit 19 bezeichnet. Aufgrund seines Gewichtes verlängert sich das Kölbel 19, wobei sein Farbglasüberfang 21 ausgedünnt wird. Der Vorgang kann beschleunigt werden, indem durch nicht dargestellte Vorrichtungen Druckluft in den Innenraum des Kölbels geblasen wird.

Fig. 4b zeigt eine andere Vorrichtung zum Erwärmen bzw. Längen eines Kölbels. Diese Vorrichtung umfaßt eine Wanne 23, auf deren Boden nach oben gerichtete Gasbrenner 25 oder dgl. angeordnet sind. Das in Fig. 4b mit 27 bezeichnete, wiederum ausschließlich entlang seines Randes an einem Ring 29 hängende Kölbel wird zumindest teilweise in die Wanne 23 eingesenkt, so daß die Seitenwände der Wanne 23 die heißen Verbrennungsgase über die Seitenflächen des Kölbels 27 lenken.

Fig. 5 zeigt schematisch eine Blasform, mit einem geteilten Formunterteil 31 für den Kelch eines Kelchglases das an einem Ring 33 hängende Kölbel 35 wird in das Formteil 31 eingefahren und nach oben hin durch einen Deckel 37 verschlossen. Über eine Blasluftöffnung 39 des Deckels 37 wird Druckluft in das Kölbel 35 eingeblasen, die es an die Innenwandung des Formunterteils 31 drückt.

Das vorstehend erläuterte Verfahren wird kontinuierlich ausgeführt, wobei die dargestellten Formen und Wärmestationen lediglich schematisch das Grundprinzip zeigen. Für das Verfahren lassen sich im wesentlichen sämtliche bekannten Konstruktionen einsetzen.

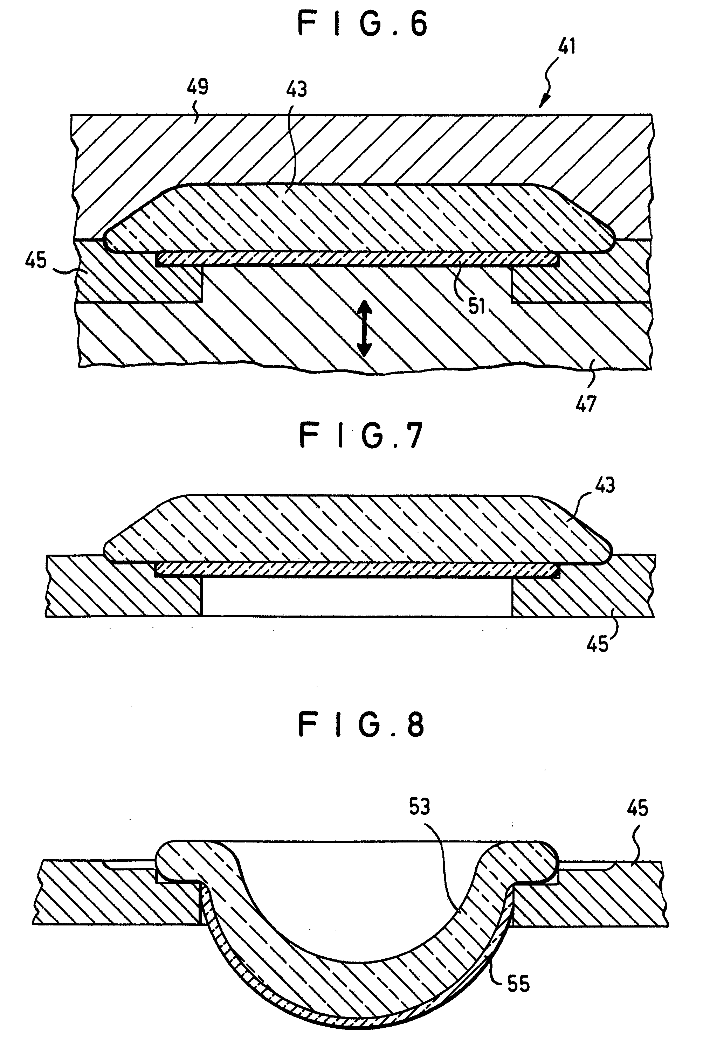

Bei einer Variante des Verfahrens wird in einer in Fig. 6 allgemein mit 41 bezeichneten Form eine mehrschichtige Glaslinse 43 gepreßt. Die Form 41 umfaßt im dargestellten Ausführungsbeispiel einen Haltering 45, der zusammen mit einem Preßstempel 47 von unten her auf ein Formoberteil 49 zugestellt werden kann. Bei der Herstellung eines überfangenen Kölbels wird zunächst ein flacher, aus Farbglas bestehender Mantelkörper 51 auf den aus dem Formoberteil 49 herausgezogenen Preßkolben 47 aufgelegt. Der Mantelkörper 51 ist so groß, daß er den Haltering 45 überlappt. Der auf dem Preßstempel 47 liegende Mantelkörper 51 wird ähnlich dem Arbeitsschritt nach Fig. 1 erwärmt und entsprechend Fig. 2 mittels eines Speisers oder dgl. von oben her mit einem Glastropfen aus dem Grundglas des Kölbels beschickt. Der Preßkolben 47 wird in das Formoberteil 49 eingefahren, wobei der Glastropfen in die Form der Glaslinse 43 gepreßt wird und sich innig mit dem Mantelkörper 51 verbindet. Eventuelle Glasüberschüsse werden in nicht dargestellten Hohlräumen der Form 41 aufgenommen.

Fig. 7 zeigt die entlang ihres Randes auf dem Ring 45 aufliegende Glaslinse 43 nach dem Entformen aus dem Formoberteil 49 und dem Abziehen des Preßstempels 47. Aufgrund des Eigengewichtes der ausschließlich entlang ihres Randes aufliegenden Glaslinse 43 sinkt die Glaslinse 43 durch die Öffnung des Rings 45 und bildet, wie in Fig. 8 dargestellt ist, ein Kölbel 53 mit einem Farbglas-Außenüberfang 55. Das Kölbel 53 wird entsprechend den Fig. 4a und 4b wiederum gelängt, wobei auch während der Kölbelbildung bereits Wärme zugeführt werden kann. Das Kölbel 53 wird anschließend in einer Blasform entsprechend Fig. 5 fertiggeblasen.

Durch Wenden der Glaslinse 43 vor der Ausbildung des Kölbels lassen sich auch innen überfangene Gläser herstellen.

Die vorstehend erläuterten Mantelkörper können aus Einschichtglas bestehen, wenn ein einfarbiger Überfang erwünscht ist. Das Verfahren läßt sich jedoch auch zur Herstellung mehrfarbiger Überfänge ausnutzen, wenn Mantelkörper eingesetzt werden, die aus mehreren Schichten verschiedenfarbigen Glases bestehen.

## Ansprüche

1. Verfahren zum maschinellen Herstellen geblasener Überfang-Hohlglaskörper, bei dem zunächst ein Glaskörper (5 ; 51) hergestellt wird, bei dem dann in einer Preßform (1 ; 13 ; 41) auf den Glaskörper (5 ; 51) ein Glastropfen (11) aufgebracht und in der Preßform (1 ; 13 ; 41) zusammen mit dem Glaskörper (5) zu einem mehrschichtigen Preßling (19 ; 27 ; 35 ; 43) gepreßt wird, wobei der Preßling hierbei (Fig. 3) oder nachträglich (Fig. 8) zu einem Kölbel geformt wird und bei dem dann das Kölbel in eine Fertigform (31) eingeblasen wird, dadurch gekennzeichnet, daß bei der Herstellung des Preßlings (19 ; 27 ; 35 ; 43) zunächst ein der Formkontur der Preßform (1 ; 13 ; 41) im wesentlichen angepaßter, schalen- oder scheibenförmiger Mantelkörper (5 ; 51) aus Farbglas des Überfangs hergestellt wird und daß der Mantelkörper (5 ; 51) vorgewärmt wird, so daß er sich der Formkontur der Preßform (1 ; 13 ; 41) anpaßt, bevor ein Glastropfen (11) aus Grundglas des Überfang-Hohlglaskörpers auf ihn aufgebracht wird.

2. Verfahren nach Anspruch 1, dadurch gekennzeichnet, daß der Mantelkörper (5) vor dem einlegen in die Preßform (1) zu einer Schale vorgeformt wird.

3. Verfahren nach Anspruch 1, dadurch gekennzeichnet, daß der Glasschmelzetropfen auf einen als flache Scheibe geformten Mantelkörper (51) aufgebracht und zu einer im wesentlichen flachen, mehrschichtigen Linse (43) gepreßt wird.

4. Verfahren nach Anspruch 3, dadurch gekennzeichnet, daß die Linse (43) zur Bildung des Kölbels (53) im erwärmten Zustand während einer vorgegebenen Zeitspanne von unten her ausschließlich entlang ihres Randbereichs aufgelagert wird.

5. Verfahren nach Anspruch 1, dadurch gekennzeichnet, daß das Kölbel (19 ; 27 ; 53) mit seiner Öffnung nach oben entlang seines Öffnungsrandes gehalten und zur Auslängung erwärmt wird.

6. Verfahren nach Anspruch 1, dadurch gekennzeichnet, daß als Mantelkörper (5, 51) ein Mehrschichtenglaskörper verwendet wird.

## Claims

1. Method for the mechanical production of blown hollow flashed glass articles, in which firstly a glass body (5 ; 51) is produced, in which then a glass drop (11) is applied in a press mould (1 ; 13 ; 41) to the glass body (5 ; 51) and is pressed in the press mould (1 ; 13 ; 41) together with the glass body (5) into a multi-layer pressing (19 ; 27 ; 35 ; 43), the pressing being shaped in this operation (Figure 3) or subsequently (Figure 8) into a bulb, and in which then the bulb is blown into a final mould (31), characterised in that in the production of the pressing (19 ; 27 ; 35 ; 43) firstly a jacket body (5 ; 51) of shell or disc form substantially adapted to the shape contour of the press mould (1 ; 13 ; 41) is produced from coloured glass of the flashing and in that the jacket body (5 ; 51) is preheated so that it adapts itself to the shape contour of the press mould (1 ; 13 ; 41), before a glass drop (11) of basic glass of the hollow flashed glass article is applied to it.

2. Method according to Claim 1, characterised in that the jacket body (5) is pre-shaped into a shell before insertion into the press mould (1).

3. Method according to Claim 1, characterised in that the molten glass drop is applied to a jacket body (51) shaped as a flat disc and is pressed into a substantially flat, multi-layer lens (43).

4. Method according to Claim 3, characterised in that the lens (43) is supported from beneath exclusively along its marginal region during a predetermined period in the heated condition for the formation of the bulb (53).

5. Method according to Claim 1, characterised in that the bulb (19 ; 27 ; 53) is held along its aperture edge with its aperture upwards and heated for elongation.

6. Method according to Claim 1, characterised in that a multi-layer glass body is used as jacket body (5, 51).

## Revendications

1. Procédé de fabrication mécanique d'articles soufflés en verre creux doublé dans lequel on commence par réaliser un élément en verre (5 ; 51), on dépose ensuite une goutte de verre (11) dans un moule (1 ; 13 ; 41) sur l'élément de verre (5 ; 51) et on la comprime avec l'élément de verre (5) pour obtenir une ébauche multicouches (19 ; 27 ; 35 ; 43), cette ébauche étant formée pour obtenir une paraison à ce moment (figure 3) ou par la suite (figure 8) et la paraison étant ensuite soufflée dans un moule définitif (31), caractérisé en ce que, lors de la réalisation de l'ébauche (19 ; 27 ; 35 ; 43), on commence par réaliser un corps d'enveloppe (5 ; 51) constitué en verre coloré du doublé, en forme de coquille ou de disque, épousant sensiblement la forme du contour du moule (1 ; 13 ; 41) et en ce que le corps d'enveloppe (5 ; 51) est soumis à un pré-chauffage de manière qu'il épouse la forme du contour du moule (1 ; 13 ; 41) avant de déposer sur lui une goutte de verre (11) constituée par le verre de base de l'élément en verre creux doublé.

2. Procédé selon la revendication 1, caractérisé en ce que le corps d'enveloppe (5) est préformé en forme de coquille avant d'être introduit dans le moule (1).

3. Procédé selon la revendication 1, caractérisé en ce que la goutte de verre fondu est déposée sur un corps d'enveloppe (51) ayant la forme d'un disque plat et est comprimée de manière à obtenir une lentille multicouche (43) sensiblement plate.

4. Procédé selon la revendication 3, caractérisé en ce que la lentille (43) est supportée à l'état chaud en vue de la formation de la paraison (53) pendant une durée prédéterminée, exclusivement le long de son pourtour et par le dessous.

5. Procédé selon la revendication 1, caractérisé en ce que la paraison (19 ; 27 ; 53) est maintenue le long du pourtour de son ouverture, son ouverture étant tournée vers le haut, et est chauffée en vue d'être allongée.

6. Procédé selon la revendication 1, caractérisé en ce qu'on utilise en tant que corps d'enveloppe (5 ; 51) un élément en verre multicouche.

0 039 490

# FIG.1

# FIG.2

# FIG.3

1

0 039 490

# FIG.4a

19  15
17        17
21

17

# FIG.4b

27  29
23
25  25

# FIG.5

39  37
33
35
31  31

2

FIG.6

FIG.7

FIG.8